# EUROPEAN PATENT SPECIFICATION

(11) **EP 2 653 768 B1**
(45) Date of publication and mention of the grant of the patent: **19.11.2014**
(21) Application number: 13163454.5
(22) Date of filing: 12.04.2013
(51) Int. Cl.: F16L 23/036, F16L 27/04, F16L 37/20, F16L 17/03, F16L 37/12

(54) **A quick- action coupling for pipes**
Schnellkopplung für Rohre
Raccord à action rapide pour tuyaux

(30) Priority: 18.04.2012 IT RE20120029
(43) Date of publication of application: 23.10.2013
(73) Proprietor: Dallai ernesto societa a Responsibilita limitata, 42046 Reggiolo (Reggio Emilia) (IT)
(72) Inventor: Lavagnini, Luca, 42046 Reggiolo, Reggio Emilia (IT)
(74) Representative: Corradini, Corrado

(56) References cited:
- DE-C- 103 608
- GB-A- 675 733
- US-A- 4 722 555
- US-B2- 6 709 028

## Description

The present invention relates to a quick-action coupling for pipes.

For many years now, for example in agriculture, for irrigation, or in industry for the transport of fluids, the technology of quick release couplings for the connection of pipes has been widely used.

In this technology, joint components suitable for being coupled to one another are applied to the ends of the pipes.

For example, the male and female joint components are constituted by a bulging segment of spherical surface (known as a ball-and-socket joint). In this way, when the pipes are coupled, with the axes incident, they can be moved with respect to one another, forming small angles between the axes. Couplings are known having the characteristics outlined in the preamble of claim 1, for example illustrated in patent publication US6709028 in the name of the present Applicant. The coupling comprises an engaging means for constraining the two components in a coupled configuration. The engaging means comprise a flange, fixed to a first component (for example the male component), to which a lever is hinged by a pin which acts as the rotation axis of the lever itself.

A hook is then pinned to the lever, by means of a second pin, which is suitable for engaging the second component (female).

Via the rotation thereof about the first pin, the lever, brings the hook into contact with the female component and determines:
- an open position, in which the second pin is placed above the straight line joining the first pin with the contact point between the hook and the female component, and
- a closed position in which the second pin is placed below or at the straight line joining the first pin to the contact point.

In the passage from the open position to the closed position, the distance between the contact point and the first pin decreases.

When the coupling is in the closed position, the hook is subjected to a longitudinal thrust due to the fluid pressure in the pipes and/or to the reaction to the mutual interlocking between the two joint components; in these conditions, the second pin, being below the straight line, is affected by a restraining reaction exerted by the flange that holds the coupling means in the closed position.

Normally the presence of at least one other engaging means is also necessary, placed in a diametrically opposite position with respect to the usually-provided engaging means that, for example, can be identical to the first.

A drawback is that the closed position of the joint is determined by the presence of a longitudinal thrust which tends to distance the two coupling parts (male and female) from one another; in the absence of this thrust the closed position of the engaging means is unstable and insecure.

This longitudinal thrust is normally not present during the assembly phase of the two coupling components: until the components have been tightened and the second coupling means have also been set in the closed position, the longitudinal thrust is substantially absent.

In addition, the longitudinal thrust is lacking if the coupling between the coupling components is loose. Therefore, in these conditions, there is a risk that there will be an undesired loss of constraint between the two coupling components.

An object of the present invention is therefore to solve the above-mentioned drawbacks in the prior art, with a solution that is of simple construction, practical in use and relatively inexpensive.

This and further aims are attained by the invention as it is characterized in the claims. The invention is described in detail in the following, with the aid of the accompanying figures which illustrate an embodiment thereof, purely by way of non- exclusive example.

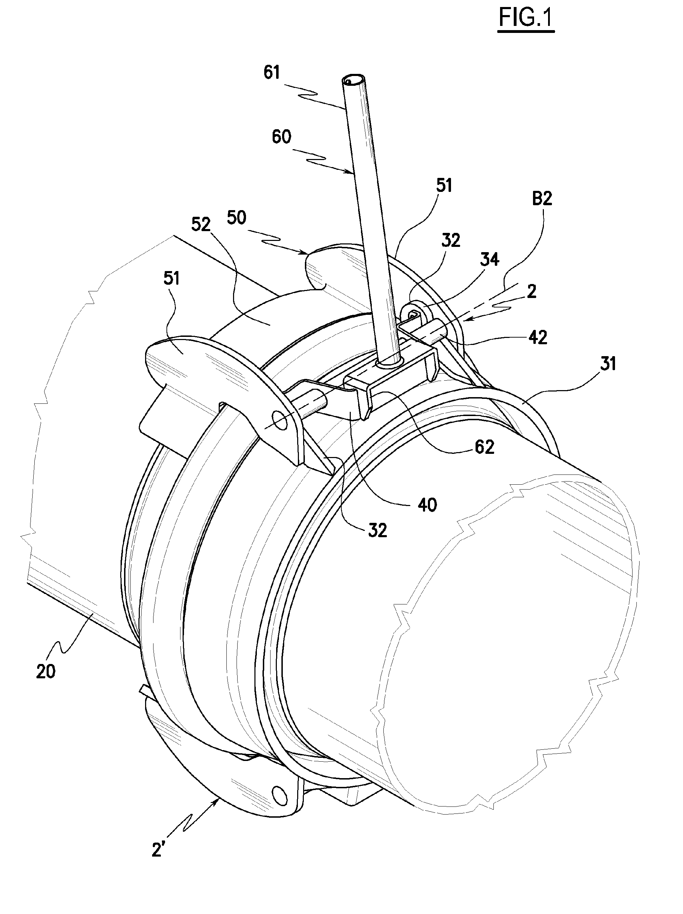

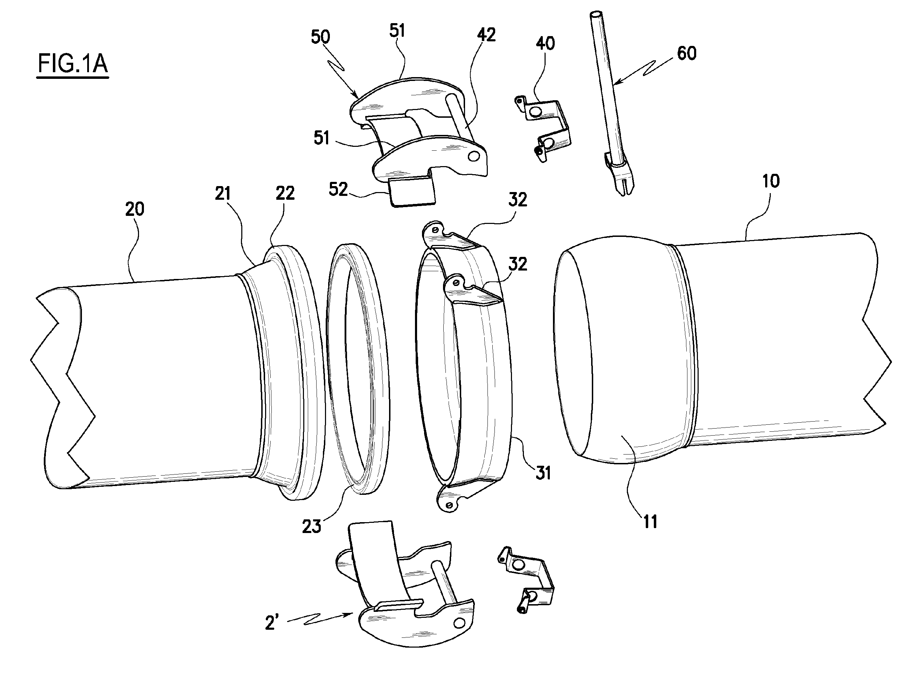

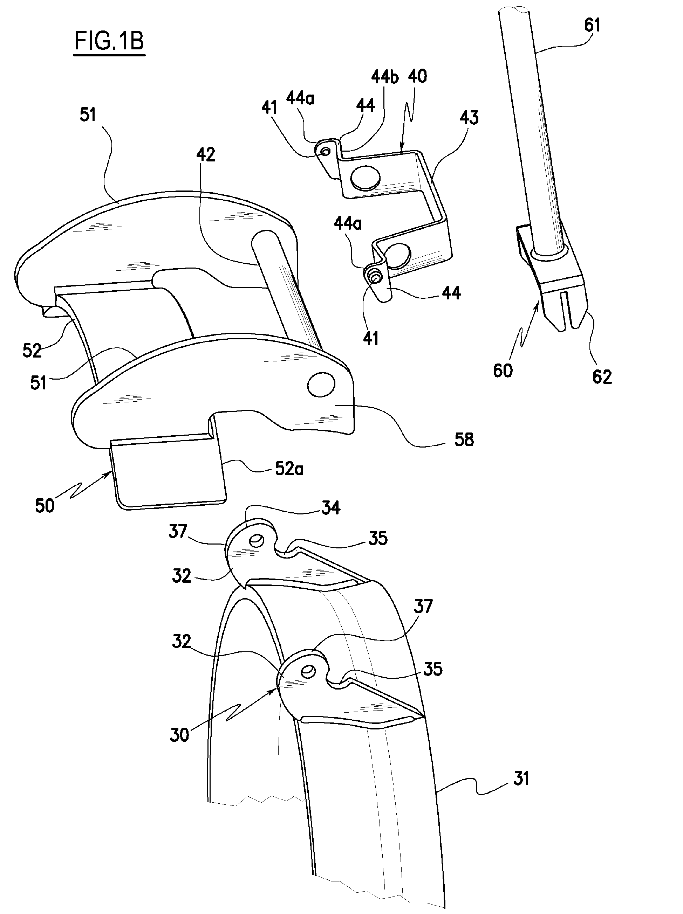

Figure 1 is a perspective view of the coupling in the closed position.
Figure 1A is a perspective view of the coupling of figure 1 in an exploded view.
Figure 1B is an enlarged detail of figure 1A.

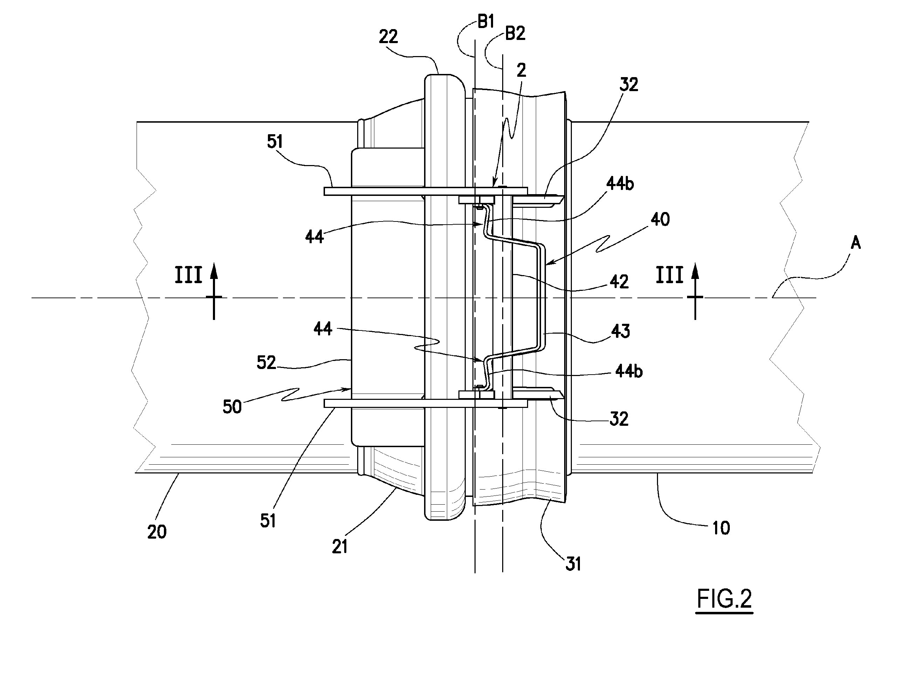

Figure 2 is a top view of the coupling of figure 1, applied to two pipes.

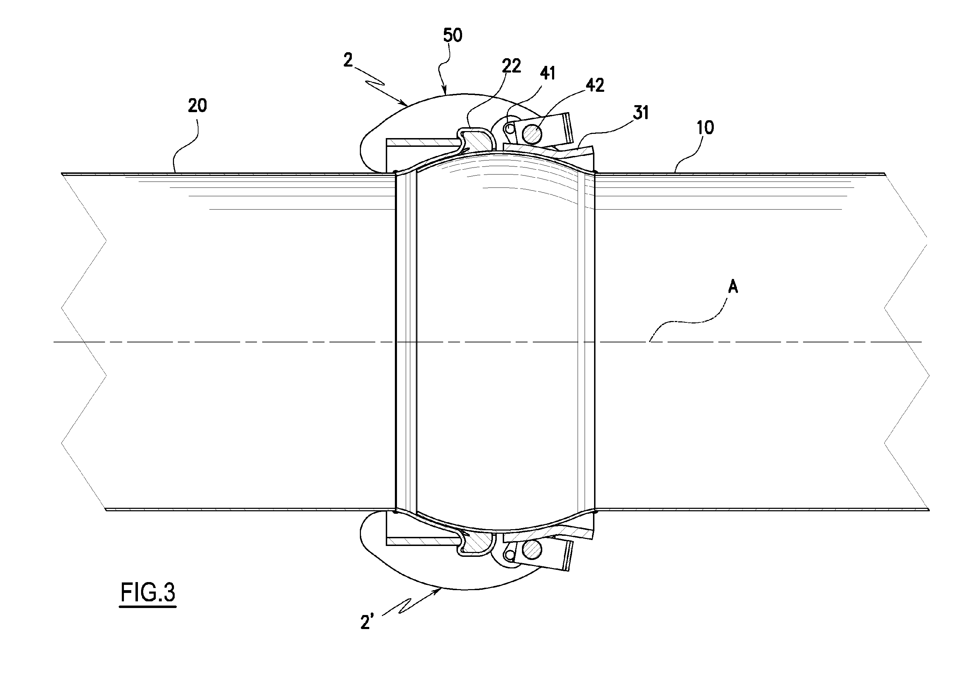

Figure 3 is a section along plane III-III of Fig 2.

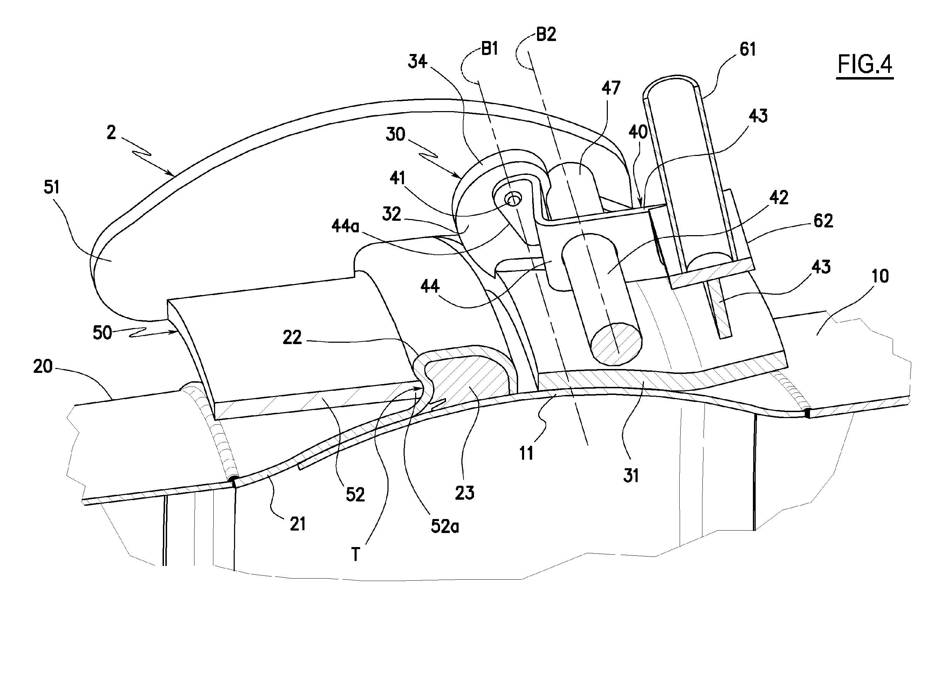

Figure 4 is the same detail as in figure 1A, sectioned along an axial plane and in perspective view.
Figure 5 is an enlarged-scale detail of figure 3.
Figure 5A is a section on the plane AA of figure 5.
Figure 5B is a section view according to planes BB of figure 5A.
Figures 6A to 6C show a detail of figure 5, in different configurations in the passage from the open position to the closed position

The quick-action coupling for pipes comprises two joint components (11, 21) fitted to respective ends of pipes (10, 20), suitable for coupling together.

In a preferred embodiment of the invention, the two joint components define a ball-and-socket joint; a first joint component 11 is fixed to an end of the pipe 10 (male component), constituted by a swelling of the pipe such as to form a segment of a spherical surface.

The first component 11 is destined to be coupled with a second component 21 (female component), fixed to the second pipe 20, and has a swelling similar to the previous one, but of greater diameter, such as to enable the coupling with the first component 21. The free edge of the second component 21 is fashioned in such a way as to form a projection 22 towards the outside and a recess towards the inside, suitable for receiving an internal seal 23. The coupling comprises at least an engaging means 2 for constraining the two joint components in a reciprocal coupled configuration.

The engaging means 2 comprises a flange 30 which extends in a plane parallel to the longitudinal axis A of the joint and is longitudinally solidly constrained to the first component 11, i.e. can be solidly constrained, directly or indirectly, to the first component 11, or can be not solidly constrained to the first component 11 while remaining constrained to it in longitudinal displacements.

In a preferred embodiment, the flange 30 is solidly constrained to a ring 31 which embraces the first component 11 and engages it along a transversal plane so that it can rotate about the longitudinal axis relative to the first component 11 and yet remain constrained thereto in the longitudinal direction.

The engaging means 2 further comprises a lever 40 hinged to the flange 30 by a first pin 41, an axis of which defines a rotation axis B1 of the lever, perpendicular to a plane passing through the longitudinal axis A.

The coupling further comprises a hook 50, suitable for coupling the second component 21, hinged to the lever 40 by means of a second rotation axis B2, parallel to the first rotation axis B1.

In a preferred embodiment, illustrated in the figures, the flange 30 is composed of two parallel specular plates 32, which lie on planes that are distant and parallel to one another and to the longitudinal axis A, a through-hole being formed in each of the plates, suitable for housing a respective first pin 41.

Further, the hook 50 comprises two parallel specular plates 51, which lie on planes that are distant and parallel to one another and to the longitudinal axis A. The plates 51 comprise a first end, which is hinged to the lever 40 by a second transversal pin 42, an axis of which defines a second rotation axis B2.

In addition, the plates 51 are connected to each other, at a second end thereof, by a transversal intermediate plate 52, positioned beyond the engaging projection 22 provided in the second joint component 21; the intermediate plate 52 exhibits a rear end 52a facing towards the projection 22 and is destined to engage with the projection 22.

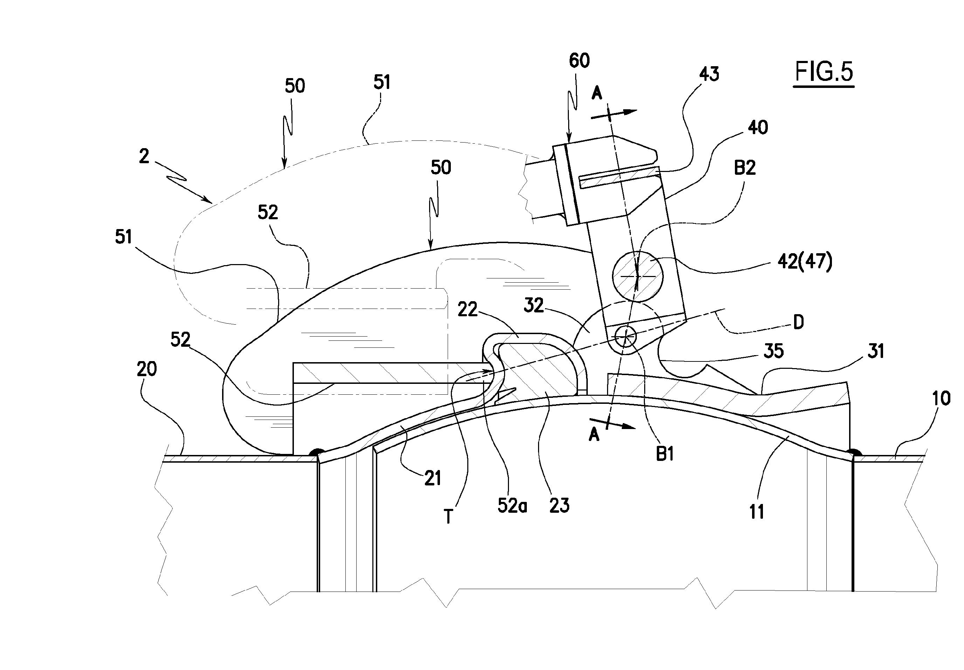

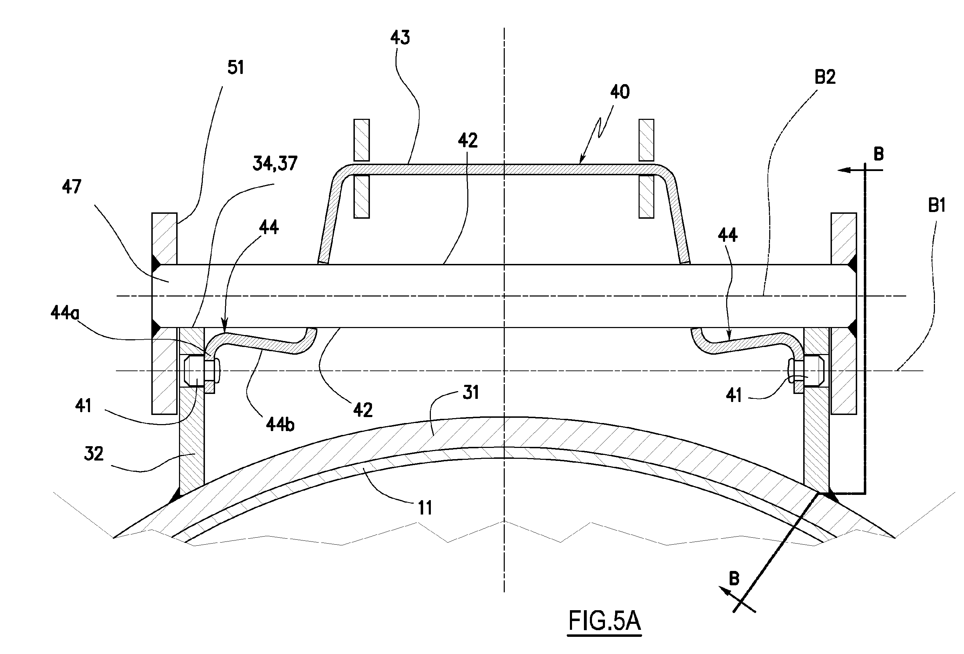

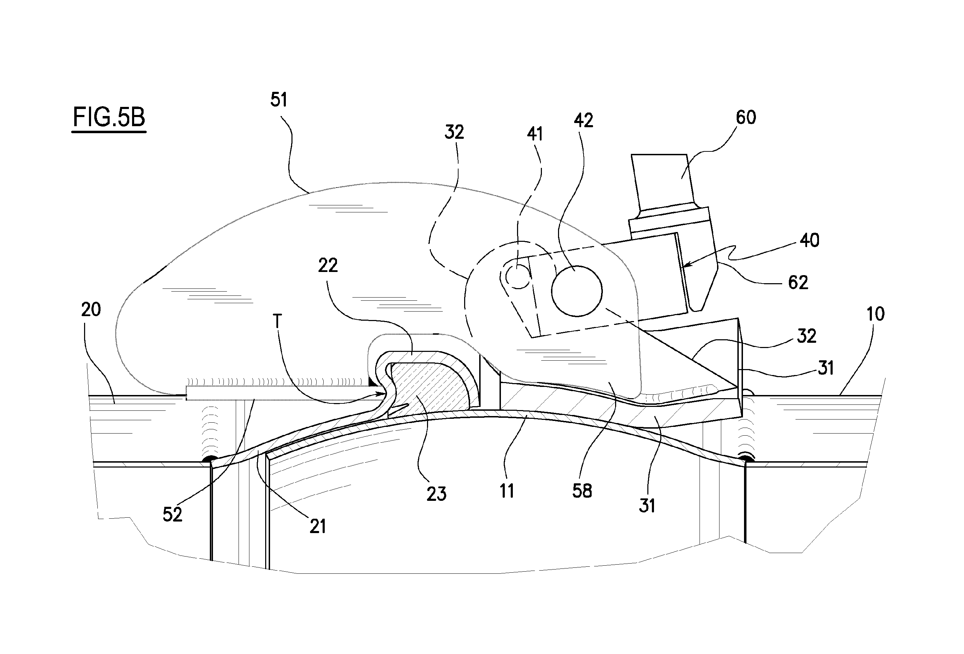

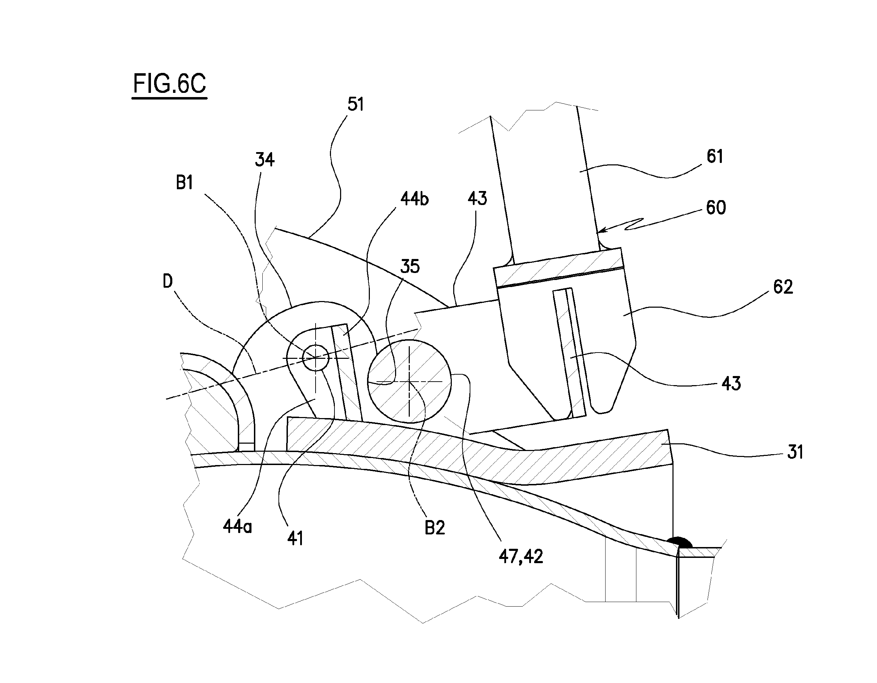

The lever 40 can rotate about the first rotation axis B1 resulting in an open position (shown by dashed lines in figure 5) and a closed position (illustrated in figure 6C).

In the open position, the second rotation axis B2 is positioned above the straight reference line D (see figure 5), which joins the first rotation axis B1 with the center point T of contact area between the engagement 50 (rear end 52a of the plate 52) and the second component 21 (projection 22). In the open position, the plate 52 can be neared or distanced from the projection 22, by rotating only the hook about the second rotation axis B2.

In the closed position, the plate 52 is engaged to the protrusion 22 and the second rotation axis B2 is located below or at the reference line D.

The distance between the contact area of the plate 52 with the projection 22 and the first rotation axis B1 decreases with the passage of the lever 40 from the open position to the closed position, up to produce the mutual nearing, by a desired degree, between the two joint components.

According to the invention, the joint comprises at least a sliding track 37, solidly constrained to the first component 11, which lies in a plane parallel to the longitudinal axis A of the pipes 10, 20, and at least an abutting body 47, solidly mobile with the lever 40, destined to slide on the sliding track 37 in the tract between the closed position and the open position of the lever and vice versa.

According to the embodiment shown in the figures, two parallel and identical tracks are provided, constituted by edges 34 of the parallel plates 32 which act simultaneously on the abutment body 47; this is, preferably, defined by two end portions of the second pin 42, which as already mentioned above functions as a hinge pin for the lever 50.

The sliding tracks 37 are shaped such as to determine, along the tract followed by the body 47 sliding against the track, a variation of the distance between the abutting body 47 and the first rotation axis B1, wherein the distance presents a maximum value substantially at the intersection between the straight line of reference D and the track 37, and decreases in a direction towards the upstream and downstream directions starting from the point of maximum value. The distance variation is absorbed by an elastically deformable element which is destined to deform during the sliding of the body 47 on the track 37.

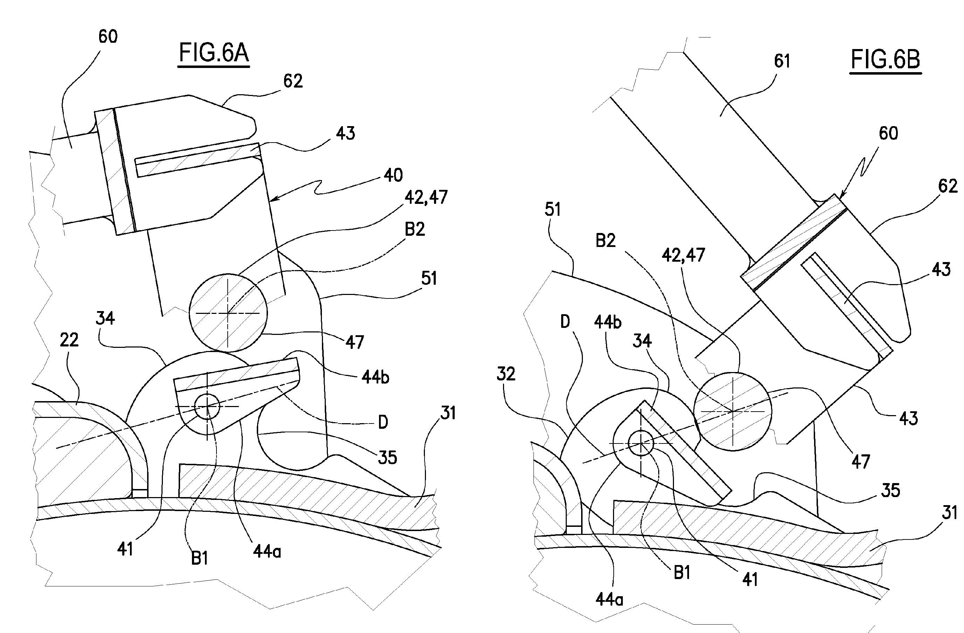

In detail, the edges 34 of the plates 32 are shaped in such a way that the distance of the first rotation axis B1 from the edge is variable. In particular the distance is at a maximum at the intersection of the straight line D of reference (the position shown in figure 6B) and is decreasing as it proceeds downstream, i.e. towards the closed position (to the right in the figures - see figure 6C), and as it proceeds upstream, i.e. towards the open position (to the left - see figure 6A).

When it is moved into final closed position (figure 6C), the abutting body 47 falls into a recess 35, located at the downstream end of the track 37, which makes the position thereof relative to the track more stable.

In the embodiment shown in the figures, the lever 40 includes a central portion 43 (roughly U-shaped), interposed between the two plates 32, which projects outwards, perpendicular to the pin 41, and defines the lever arm for implementing the rotation thereof; the second pin 42 is fixed to the central portion 43.

Two lateral portions 44 are joined to the lower end of the central portion 43, each of which lateral portions 44 exhibits a terminal end 44a hinged by the first pin 41 to a respective plate 32; also, the lateral portions 44 each comprise an intermediate portion 44b, connected to the central portion 43, which central portion 43 develops substantially parallel to the axes B1 and B2.

In detail, the lever 40 is formed from a single elongate flat element, bent such as to form the above-described portions 43 and 44, crossed, along the bottom of the central portion 43, by the second pin 42.

An auxiliary tool 60 is advantageously provided, comprising a lever arm 61, activatable by hand by the operator, and a series of tines 62, provided with slits, with which the arm 61 joint-engages the intermediate portion 43 of the lever. The use of the tool 60 enables a high degree of force to be applied to the lever 40 such as to bring it from the open position into the closed position and vice versa.

A joint preferably comprises at least a second engaging means 2', located on the opposite side to the first, having the ring 31 in common with the first engaging means 2, which may advantageously have the characteristics of the engaging means 2 described above, or can be of another and traditional type.

In use, the joint components 11 and 21 of the respective pipes 10, 20 are coupled together.

For example, in the illustrated embodiment, the male component 11 is inserted into the female component 21: after placing the lever 40 in the open position (figure 5), the hook 50 is moved into the engagement position of the projection 22 (initial position of the coupling).

The lever 40 is then rotated about the rotation axis B1, towards the closed position (clockwise in the figures). This rotation causes a displacement of the hook 50 which reduces the distance between the contact area between the plate 52-projection 22 and the first pin 41, and therefore nears the two join components 11 and 21.

During the rotation of the lever 40 between the open position and the closed position of the joint, the abutting body 47, solidly constrained to the lever itself, slides on the sliding track 37 as it follows the tract 47. Along this tract, first there is an increase in the distance between the body 47 and the first rotation axis B1, up to the maximum amount which is substantially at the straight reference line D which, in the radial plane, joins the first rotation axis B1 with the center point of contact area between the hook 50 and the second component 21. In this configuration (figure 6B), the distance between the ends of two pipes 10 and 20 is substantially equal to the minimum value. As the rotation of the lever continues, clockwise in the figures, the distance of the body 47 from the axis B1 decreases, and after a few degrees from the point of intersection with the straight line D (10-30 degrees), the body 47 is brought into the recess 35 (figure 6C).

When the body 47 is housed in the recess 35, the second axis B2 is positioned below the reference line D. This is the closed position of the joint, in which the fluid pressure inside the pipes sets the joint in traction; in particular the hook 50 is placed in traction by substantially longitudinal opposing forces, applied at the plate 52 - projection 22 contact area and on the body 47, blocked in the recess 35.

The variations in the distance between the body 47 and the axis B1 are absorbed mostly from the intermediate portion 44b of the lever 40, which is elastically flexible and deforms under stress, especially to a flexing force.

When the body 47 is positioned in the recess 35, the distance of the axis B2 from the axis B1 is substantially less than the distance thereof when the axis B2 is located at the straight line D. Therefore, if the lever 40 is moved towards the open position (i.e. anti-clockwise in the figures) the distance of the body 47 from the axis B1 is increased and a mechanical resistance is generated to the bending of the intermediate portion 44b which effectively opposes the rotation of the lever 40.

Therefore, when the body 47 is housed in the recess 35, this resistance opposes a possible undesired force tending to rotate the lever 40 towards the opening position and thus maintains the closed position against the action of any undesired forces tending to open the engaging means.

Naturally, this resistance will be of such an amount as to be exceeded without excessive difficulty, in particular with the use of the tool 60, should it be required to shift the lever into the open position.

Furthermore, according to a preferred embodiment illustrated in particular in figure 5B), the first end of the plates 51 (through which the second pin 42 passes) has a rear portion 58 which projects rearward with respect to the second pin 42 (towards the first pipe 10 to which the ring 31 is constrained). This portion 58 is of such dimensions as to come into contact with or nearly the upper surface of the ring 31 which is fixed to the flange 30, when the hook 50 is in the closed position (see figure 6C), i.e. when the lever 40 is rotated to the maximum extent and the abutting body 47 (pin 42) is inserted in the recess 35. In this closed configuration, the rear portions 58 prevent rotation of the plates 51, as the only possible rotation (in the opening direction of the hook), should the constraint at the point T of contact between the rear end 52a of the plate 52 and the plate 22 be removed, is prevented precisely by the fact that the rear portion 58 abuts against the ring 31, thus making the rotation impossible.

Therefore, as the two components 11, 21 are coupled together and the hook 50 is in the closed position, even in a case in which the two elements 11 and 21 interpenetrated one another to an excessive extent, and therefore the point of contact in the point T between the plate 52 and the recess of the projection 22 were lacking (for example because it was lower than the thrust of the seal 23, or at least the play between the two components 11 and 21 was excessive), the hook would in this case too be kept securely in the closed position, thus preventing the risk that the two pipes 10 and 20 might detach from one another.

The embodiment illustrated in the figures relates to a quick-action ball joint but it is clear that the invention can also be applied to other types of joints. Obviously numerous modifications of a practical-applicational nature can be made to the described invention, without its thereby departing from the scope of the inventive idea as claimed below.

## Claims

1. A quick-action coupling for pipes, comprising:
two joint components (11, 21) joined at respective ends of pipes (10, 20), suitable for coupling to one another,
at least an engaging means (2) for constraining the two joint components (11, 21) together in a coupled configuration,
the engaging means comprising:
at least a flange (30) that is longitudinally solidly constrained to the first component (11), parallel to the longitudinal axis of the pipes,
a lever (40) hinged to the flange (30) about a first rotation axis (B1) perpendicular to a plane passing through the longitudinal axis (A),
a hook (50), suitable for engaging the second component (21), hinged to the lever (40) at a second rotation axis (B2) parallel to the first rotation axis (B1);
wherein the lever (40), by rotating about the first rotation axis (B1) determines:
an open position in which the second rotation axis (B2) is positioned above the straight reference line (D), which joins the first rotation axis (B1) with the center point of contact area between the hook (50) and the second component (21), and
a closed position in which the second rotation axis (B2) is positioned below or at the straight reference line (D),
the distance between the contact area and the first rotation axis (B1) reducing in the passage from the open position to the closed position,
**characterised in that** it comprises:
at least a sliding track (37), solidly constrained to the first component (11);
at least an abutting body (47), mobile solidly with the lever (40), suitable for sliding on the sliding tract in the tract between the closed position and the open position of the lever and vice versa,
the sliding track being destined to determine, along the tract, a variation in the distance between the abutting body and the first rotation axis (B1), in which the distance exhibits a maximum value substantially at an intersection between the straight reference line (D) and the track (37), and diminishes progressively going upstream and downstream starting from the point of maximum value,
the lever (40) comprising at least an elastically deformable element destined to be deformed with the varying of the distance between the body and the first rotation axis (B1) in the sliding of the body on the tract.

2. The coupling of claim 1, wherein the flange (30) comprises two parallel plates (32), in each of which a through-hole is afforded, suitable for housing a first hinge pin (41) between the flange and the lever (40) which defines the first rotation axis (B1).

3. The coupling of claim 2, wherein the track is constituted by the edges (34) of the parallel plates (32) that define the flange (30).

4. The coupling of claim 3, wherein the abutting body (47) is defined by two end portions of the second pin (42), which also functions as a hinge pin for the lever (50).

5. The coupling of claim 3, wherein the lever (40) comprises two intermediate tracts (44b) connected to a central lever portion (43) which two tracts (44b) develop substantially parallel to the axes (B1 and B2) and are elastically flexible.

6. The coupling of claim 2, wherein the edge of the parallel plates (32) comprises a recess (35) destined to house the body, in the closed position thereof, forming an abutting surface suitable for not enabling the body to exit from the position.

7. The coupling of claim 1, wherein the hook (50) comprises two specular parallel plates (51) which lie on planes that are distanced and parallel to one another and to the longitudinal axis (A), which exhibit a first end, hinged to the lever (40) by a second transversal pin (42), an axis of which second transversal pin (42) defines the second rotation axis (B2), the first end having a rear portion (58) which projects posteriorly with respect to the second pin (42), which is dimensioned such as to come into contact or nearly into contact with the ring (31) to which the flange is fixed (30), when the hook (50) is in the closed position, the rear portions (58) preventing rotation of the plates (51) when the hook (50) is in the closed position.

## Patentansprüche

1. Schnellkopplung für Rohrleitungen, umfassend:
zwei Verbindungskomponenten (11, 21), die mit jeweiligen Enden von Rohrleitungen (10, 20) verbunden sind und zum Koppeln miteinander geeignet sind,
mindestens ein Greifmittel (2) zum Befestigen der beiden Verbindungskomponenten (11, 21) aneinander in einer gekoppelten Konfiguration,
wobei das Greifmittel Folgendes umfasst:
mindestens einen Flansch (30), der längs fest an der ersten Komponente (11) befestigt ist, parallel zur Längsachse der Rohrleitungen,
einen Hebel (40), der um eine erste Drehachse (B1), die senkrecht zu einer Ebene liegt, die durch die Längsachse (a) verläuft, an den Flansch (30) angelenkt ist,
einen Haken (50), der für das Greifen der zweiten Komponente (21) geeignet ist und an einer zweiten Drehachse (B2), die parallel zu der ersten Drehachse (B1) liegt, an den Hebel (40) angelenkt ist, wobei der Hebel (40) durch Drehung um die erste Drehachse (B1) Folgendes bestimmt:
eine offene Position, in der die zweite Drehachse (B2) über der Referenzgeraden (D) liegt, die die erste Drehachse (B1) mit dem Mittelpunkt der Kontaktfläche zwischen dem Haken (50) und der zweiten Komponente (21) verbindet, und
eine geschlossene Position, in der die zweite Drehachse (B2) unter oder auf der Referenzgeraden (D) angeordnet ist,
wobei sich der Abstand zwischen der Kontaktfläche und der ersten Drehachse (B1) im Übergang von der offenen Position in die geschlossene Position verringert,
**dadurch gekennzeichnet, dass** sie Folgendes umfasst:
mindestens eine Gleitspur (37), die fest an der ersten Komponente (11) befestigt ist,
mindestens einen Anschlagskörper (47), der fest mit dem Hebel (40) verbunden beweglich ist und zum Gleiten auf dem Gleitweg auf dem Weg zwischen der geschlossenen Position und der offenen Position des Hebels und umgekehrt geeignet ist,
wobei die Gleitspur dafür vorgesehen ist, entlang des Weges eine Variierung des Abstandes zwischen dem Anschlagskörper und der ersten Drehachse (B1) zu bestimmen, wobei der Abstand im Wesentlichen an einem Schnittpunkt zwischen der Referenzgeraden (D) und der Spur (37) einen Maximalwert aufweist und sich stromaufwärts und stromabwärts ausgehend von dem Punkt des Maximalwertes fortschreitend verringert,
wobei der Hebel (40) mindestens ein elastisch verformbares Element umfasst, das dafür vorgesehen ist, mit dem Variieren des Abstandes zwischen dem Körper und der ersten Drehachse (B1) beim Gleiten des Körpers auf der Spur verformt zu werden.

2. Kopplung nach Anspruch 1, wobei der Flansch (30) zwei parallele Platten (32) umfasst, in denen jeweils eine Durchgangsöffnung bereitgestellt ist, die zum Aufnehmen eines ersten Gelenkstiftes (41) zwischen dem Flansch und dem Hebel (40) geeignet ist und der die erste Drehachse (B1) bildet.

3. Kopplung nach Anspruch 2, wobei die Spur von den Rändern (34) der parallelen Platten (32) gebildet wird, die den Flansch (30) definieren.

4. Kopplung nach Anspruch 3, wobei der Anschlagskörper (47) von zwei Endabschnitten des zweiten Stiftes (42) gebildet wird, der auch als Gelenkstift für den Hebel (50) dient.

5. Kopplung nach Anspruch 3, wobei der Hebel (40) zwei Zwischenwege (44b) umfasst, die mit einem mittigen Hebelabschnitt (44) verbunden sind, wobei die beiden Wege (44b) sich im Wesentlichen parallel zu den Achsen (B1 und B2) erstrecken und elastisch flexibel sind.

6. Kopplung nach Anspruch 2, wobei der Rand der parallelen Platten (32) eine Vertiefung (35) umfasst, die dafür vorgesehen ist, den Körper in seiner geschlossenen Position aufzunehmen, und der eine Anschlagsfläche bildet, die dafür geeignet ist, das Verlassen der Position durch den Körper nicht zu ermöglichen.

7. Kopplung nach Anspruch 1, wobei der Haken (50) zwei spiegelnde parallele Platten (51) umfasst, die in Ebenen liegen, welche voneinander beabstandet sind und parallel zueinander und zur Längsachse (A) liegen und die ein erstes Ende aufweisen, das mit einem zweiten Querstift (42) an den Hebel (40) angelenkt ist, wobei eine Achse des zweiten Querstiftes (42) die zweite Drehachse (B2) definiert, wobei das erste Ende einen hinteren Abschnitt (58) aufweist, der in Bezug auf den zweiten Stift (42) nach hinten hervorsteht und der so bemessen ist, dass er in Kontakt oder nahezu in Kontakt mit dem Ring (31) kommt, an dem der Flansch (30) befestigt ist, wenn der Haken (50) in der geschlossen Position ist, wobei die hinteren Abschnitte (58) die Drehung der Platten (51) verhindern, wenn der Haken (50) in der geschlossenen Position ist.

## Revendications

1. Raccord rapide pour tuyaux, comprenant :
deux composants d'articulation (11, 21) articulés à des extrémités respectives de tuyaux (10, 20), adaptés pour s'accoupler entre eux,
au moins un moyen d'engagement (2) pour contraindre les deux composants d'articulation (11, 21) ensemble dans une configuration accouplée,
le moyen d'engagement comprenant :
au moins une bride (30) fermement contrainte longitudinalement sur le premier composant (11), parallèlement à l'axe longitudinal des tuyaux,
un levier (40) articulé à la bride (30) autour d'un premier axe de rotation (B1) perpendiculaire à un plan passant par l'axe longitudinal (A),
un crochet (50) adapté pour s'engager avec le deuxième composant (21) et articulé au levier (40) via un deuxième axe de rotation (B2) parallèle au premier axe de rotation (B1) ;
dans lequel le levier (40), en tournant autour du premier axe de rotation (B1), détermine :
une position ouverte dans laquelle le deuxième axe de rotation (B2) est positionné au-dessus de la ligne de référence droite (D) qui joint le premier axe de rotation (B1) au point central de la surface de contact entre le crochet (50) et le deuxième composant (21), et
une position fermée dans laquelle le deuxième axe de rotation (B2) est positionné en dessous ou au niveau de la ligne de référence droite (D),
la distance entre la surface de contact et le premier axe de rotation (B1) se réduisant en passant de la position ouverte à la position fermée, **caractérisé en ce qu'**il comprend :
au moins un chemin de glissement (37) fermement contraint au premier composant (11) ;
au moins un corps de butée (47) fermement mobile avec le levier (40), adapté pour glisser sur le chemin de glissement dans la zone entre la position fermée et la position ouverte du levier et réciproquement,
le chemin de glissement étant destiné à déterminer, le long de ladite zone, une variation de la distance entre le corps de butée et le premier axe de rotation (B1), dans lequel la distance présente une valeur maximale pratiquement à une intersection entre la ligne de référence droite (D) et le chemin (37), et diminue progressivement vers l'amont et vers l'aval en partant du point de valeur maximale,
le levier (40) comprenant au moins un élément élastiquement déformable destiné à être déformé avec la variation de la distance entre le corps et le premier axe de rotation (B1) lors du glissement du corps sur la zone.

2. Raccord selon la revendication 1, dans lequel la bride (30) comprend deux plaques parallèles (32) dans chacune desquelles un trou traversant est réalisé, adapté pour y loger un premier goujon de charnière (41) entre la bride et le levier (40) qui définit le premier axe de rotation (B1).

3. Raccord selon la revendication 2, dans lequel le chemin est constitué par les bords (34) des plaques parallèles (32) qui définissent la bride (30).

4. Raccord selon la revendication 3, dans lequel le corps de butée (47) est défini par deux parties terminales du deuxième goujon (42), qui fait également office de goujon de charnière pour le levier (50).

5. Raccord selon la revendication 3, dans lequel le levier (40) comprend deux zones intermédiaires (44b) connectées à une partie de levier centrale (43), lesdites deux zones (44b) se développant de manière sensiblement parallèle aux axes (B1 et B2) et étant élastiquement flexibles.

6. Raccord selon la revendication 2, dans lequel le bord des plaques parallèles (32) comprend une encoche (35) destinée à loger le corps, dans sa position fermée, formant ainsi une surface de butée adaptée pour ne pas permettre au corps de sortir de ladite position.

7. Raccord selon la revendication 1, dans lequel le crochet (50) comprend deux plaques parallèles spéculaires (51) se trouvant dans des plans qui sont espacés et parallèles entre eux ainsi qu'à l'axe longitudinal (A), et qui présentent une première extrémité articulée au levier (40) par un deuxième goujon transversal (42), l'axe du deuxième goujon transversal (42) définissant le deuxième axe de rotation (B2), la première extrémité comportant une partie arrière (58) qui se projette vers l'arrière par rapport au deuxième goujon (42), qui est dimensionné de manière à venir en contact ou pratiquement en contact avec l'anneau (31) auquel la bride est fixée (30), lorsque le crochet (50) se trouve dans la position fermée, les parties arrière (58) évitant une rotation des plaques (51) lorsque le crochet (50) se trouve dans la position fermée.
